# FASCICULE DE BREVET EUROPEEN

(11) **EP 0 969 240 B1**
(45) Date de publication et mention de la délivrance du brevet: **14.05.2003**
(21) Numéro de dépôt: 99420144.0
(22) Date de dépôt: 25.06.1999
(51) Int. Cl.: F16L 39/00

(54) **Dispositif de puisage pour une installation de distribution de liquide**
Flüssigkeitsdruck- Erhöhungsgerät für Abgabeanlage
Liquid pressuring device for a dispensing plant

(30) Priorité: 30.06.1998 FR 9808475
(43) Date de publication de la demande: 05.01.2000
(73) Titulaire: Rheo Mix, 69500 Bron (FR)
(72) Inventeur: Kubiak, Edouard Albert, 69008 Lyon (FR)
(74) Mandataire: Myon, Gérard Jean-Pierre

(56) Documents cités:
- GB-A- 2 229 781
- US-A- 3 498 647
- US-A- 4 934 744

## Description

L'invention a trait à un dispositif de puisage pour une installation de distribution d'un produit liquide tel que de l'eau de qualité déterminée, par exemple une eau pure, une eau purifiée ou une eau déminéralisée.

Dans le domaine de la distribution de l'eau à l'intérieur de zones de production, dénommées parfois "zones process", ou à l'intérieur de laboratoires de contrôle, d'analyse, de développement ou de recherche, il est connu par example de US-A-3 498 647, d'éviter de créer des "bouts morts" afin de limiter le plus possible les risques de pollution ou de décantation. Pour ce faire, on peut réaliser une boucle de circulation de l'eau en U alors qu'une vanne de puisage est disposée dans la partie centrale de cette boucle, par exemple au point le plus bas lorsque cette boucle descend du plafond du laboratoire. En fonction du diamètre des tubes utilisés pour réaliser cette boucle, sa largeur totale ne peut pas être réduite en deçà d'une valeur découlant du rayon de courbure minimum que peut supporter le tube utilisé. Une telle boucle est peu esthétique et constitue une zone d'accumulation de la poussière, ce qui peut être rédhibitoire pour certains types de laboratoires. Il est généralement prévu de capoter cette tuyauterie avec une plaque formant cache, ce qui majore d'autant le prix de revient de la boucle de distribution.

La situation est analogue lorsque la boucle de circulation de liquide est raccordée à une tuyauterie située sous une paillasse, auquel cas la boucle est en forme de U renversé, ou derrière un mur, auquel cas la boucle est en forme de U dans un plan sensiblement horizontal.

Dans tous les cas, l'encombrement latéral d'une telle boucle de distribution en U est gênant lorsque plusieurs boucles de distribution doivent être disposées côte à côte, par exemple pour distribuer des liquides distincts au-dessus d'un même évier ou lorsqu'une telle boucle de distribution doit être montée sur une surface de faible largeur, telle qu'un poteau.

Enfin, il est le plus souvent nécessaire de mettre en forme une boucle de puisage en U sur son lieu d'installation, en fonction de son environnement, ce qui nécessite des opérations de cintrage de tubes sur chantier qui peuvent s'avérer longues et retarder l'installation d'un laboratoire. Dans le cas d'une boucle de tubes en acier inoxydable, on doit souder ensemble, sur site, des sections droites et des coudes, ce qui s'avère délicat et peut être long.

C'est à ces inconvénient qu'entend remédier l'invention en proposant un dispositif de puisage dont les dimensions transversales sont optimisées sans création d'un bout mort, alors que son installation est aisée.

Dans cet esprit, l'invention concerne un dispositif de puisage pour une installation de distribution de produit liquide comprenant une vanne commandée, caractérisé en ce qu'il comprend deux conduits concentriques dédiés, pour l'un, à l'amenée du liquide jusqu'au niveau de la vanne et, pour l'autre, à la re-circulation du liquide à partir de la vanne.

Grâce à l'invention, la circulation et la re-circulation concentriques de l'eau vers et à partir de la vanne de puisage permettent de former un dispositif qui présente un aspect extérieur mono-tube, c'est-à-dire d'une largeur relativement faible correspondant à son diamètre extérieur. La circulation et la re-circulation concentriques jusqu'au niveau de la vanne de puisage évitent la création d'un bout mort. Le dispositif de l'invention peut être préparé en atelier et installé rapidement sur son lieu d'utilisation dans toutes les positions habituelles.

Selon un premier aspect avantageux de l'invention, les deux conduits sont formés par deux tubes concentriques, respectivement externe et interne, le tube externe étant obturé à une extrémité alors que le tube interne est ouvert à son extrémité correspondante. Ces deux tubes concentriques définissent un premier conduit de circulation du liquide à l'intérieur du tube interne et un second conduit de circulation du liquide entre les tubes interne et externe.

Avantageusement, la vanne commandée est installée au niveau de l'extrémité obturée du tube externe. Selon les modes de réalisation de l'invention, on peut prévoir que cette vanne est montée à l'extérieur de l'extrémité obturée du tube externe ou intégrée au moyen d'obturation de ce tube au niveau de son extrémité. On peut prévoir que cette vanne est du type à membrane, à commande manuelle ou automatique.

Selon un autre aspect avantageux de l'invention, les sections de passage des conduits concentriques sont sensiblement équivalentes. Grâce à cet aspect de l'invention, les vitesses de circulation du liquide à l'intérieur de ces tubes sont sensiblement équivalentes, ce qui diminue les risques de bruits de circulation ou de cavitation de l'eau à l'intérieur de ces conduits.

Selon un autre aspect avantageux de l'invention, le dispositif de puisage comprend une collerette radiale fixée sur une surface externe d'un tube externe formant conduit de circulation du liquide, cette collerette étant apte à recevoir des moyens de coopération avec une patte d'immobilisation du tube à travers une plaque support. Cette plaque support peut être une paillasse de laboratoire, une cloison d'un mur ou d'un plafond d'un local, en fonction de l'orientation choisie pour le dispositif.

Selon un autre aspect avantageux de l'invention, le dispositif comprend un embout de raccordement des conduits à des lignes d'alimentation en liquide, cet embout étant formé de deux manchons concentriques reliés par un voile de fond, le manchon interne étant ouvert à ses deux extrémités alors que le manchon externe est pourvu d'une ouverture radiale. Ce manchon peut être raccordé, de façon démontable ou fixe, aux tubes formant les conduits de circulation du liquide avec une orientation, autour de l'axe commun de ces tubes ou conduits, choisie en fonction des positions respectives des lignes d'alimentation en liquide auxquelles il doit être raccordé.

Selon un autre aspect avantageux, mais non obligatoire, de l'invention, les conduits concentriques sont formés d'éléments en acier inoxydable, ce qui diminue sensiblement les risques de pollution du liquide, notamment dans le cas où ce liquide est une eau de qualité contrôlée. L'utilisation d'acier inoxydable permet d'obtenir une très faible rugosité intérieure des parties du dispositif en contact avec le liquide, avec un état de surface défini par Ra inférieur à 0,8 µm, voire Ra inférieur à 0,2 µm pour certaines eaux ultra-pures.

L'invention sera mieux comprise et d'autres avantages de celle-ci apparaîtront plus clairement à la lumière de la description qui va suivre de deux modes de réalisation d'un dispositif de puisage conforme à son principe, donnée uniquement à titre d'exemple et faite en référence aux dessins annexés dans lesquels :
- la figure 1 est une représentation schématique de principe, en coupe, d'un dispositif de puisage conforme à un premier mode de réalisation de l'invention, monté en position horizontale ;
- la figure 2 est une vue analogue à la figure 1 pour un dispositif conforme à un second mode de réalisation de l'invention monté en position verticale.

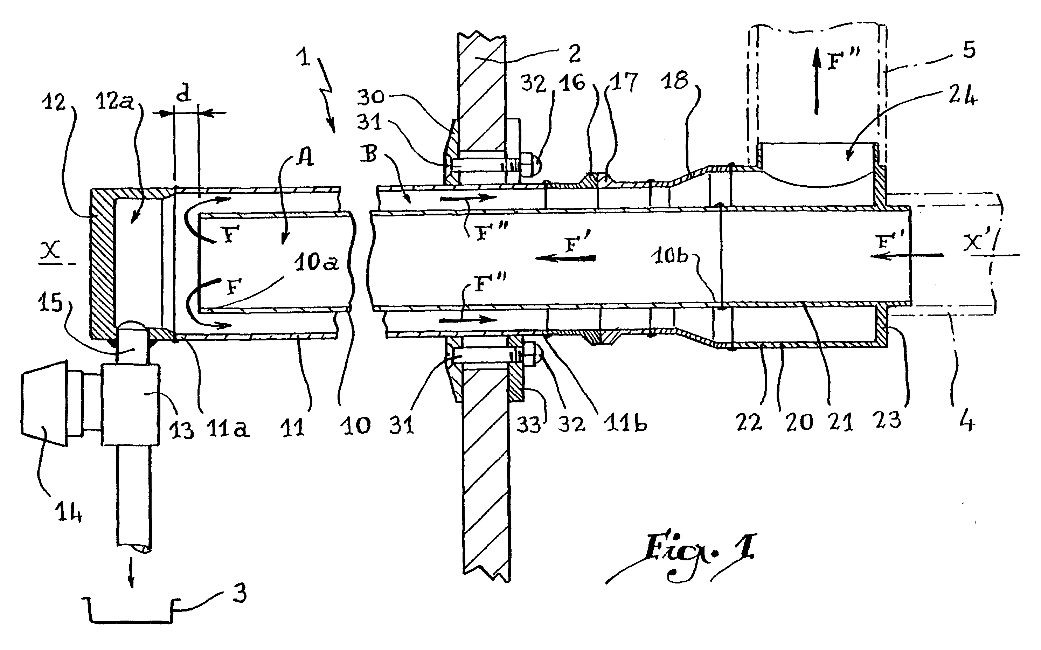

A la figure 1, un dispositif de puisage 1 est prévu pour être monté sur une cloison 2 d'un mur d'un laboratoire au-dessus d'un évier 3 représenté de façon très schématique. Le dispositif 1 est raccordé à une première conduite ou ligne 4 d'amenée d'eau purifiée à partir d'une source non représentée et à une seconde conduite 5 ou ligne de re-circulation de l'eau en direction d'un autre dispositif de puisage ou de la source d'eau.

Conformément à l'invention, le dispositif 1 comprend un premier tube 10 en acier inoxydable et un second tube 11 également en acier inoxydable de diamètre supérieur au premier tube, ces tubes 10 et 11 étant disposés de façon concentrique autour d'un axe commun XX'. Le tube 11 est pourvu d'un bouchon 12 obturant son extrémité 11a la plus éloignée de la conduite 4. Le bouchon 12 porte une vanne 13 pourvue d'un bouton de manoeuvre 14. La vanne 13 est montée au plus près de l'embout 12, de façon à limiter la longueur d'un bout mort, constitué essentiellement par un raccord 15 entre le bouchon 12 et la vanne 13. L'extrémité 10a du tube 10 la plus éloignée de la conduite 4 est située à une distance d du bouchon 12 telle qu'un écoulement de l'eau entre l'intérieur du tube 10 et le volume défini entre les tubes 10 et 11 est possible, comme représenté par les flèches F.

Ainsi, deux conduits concentriques A et B sont respectivement définis dans le volume intérieur du tube 10 et dans le volume compris entre les tubes 10 et 11, ces conduits étant respectivement prévus pour l'amenée de l'eau dans l'espace intérieur 12a du bouchon 12 et pour évacuer l'eau à partir de cet espace intérieur vers la conduite 5. En d'autres termes, les conduits A et B servent à amener l'eau jusqu'à la vanne 13 et à la re-circulation de cette eau à partir de cette vanne.

Les diamètres respectifs des tubes 10 et 11 sont choisis de telle sorte que les sections respectives des conduits A et B sont sensiblement équivalentes afin d'éviter de créer des perturbations dans l'écoulement de l'eau dans ces conduits.

A son extrémité 11b la plus proche de la conduite 4, le tube 11 est relié à une première ferrule ou bride 16 adaptée pour former, avec une seconde ferrule ou bride 17, un raccord démontable. La seconde ferrule est, quant à elle, raccordée à un réducteur de diamètre 18 lui-même relié à un embout 20 de raccordement des conduits A et B aux lignes 4 et 5 respectivement.

L'embout 20 est formé d'un manchon intérieur 21 et d'un manchon extérieur 22 reliés par un voile de fond 23. Le manchon intérieur 21 est ouvert à ses deux extrémités. Sa longueur et son diamètre sont prévus pour qu'il puisse être soudé à l'extrémité 10b du tube 10 la plus proche. A son autre extrémité, le manchon 21 est prévu pour être raccordé à la conduite 4. Par ailleurs, le manchon 22 est pourvu d'une ouverture radiale 24 par laquelle il peut être relié à la conduite 5. Ainsi, la circulation de l'eau de la ligne 4 vers le conduit A a lieu à travers le manchon 21, comme représenté par la flèche F' alors que la circulation de l'eau entre le conduit B et la ligne 5 a lieu à travers le manchon 22 et sa sortie 24, comme représenté par la flèche F".

L'embout 20 et le tube 10 qu'il supporte grâce à sa soudure sur le manchon 21 peuvent être installés par rapport aux lignes 4 et 5, puis le tube 11 est disposé autour du tube 10. Le caractère démontable de la liaison entre les ferrules 16 et 17 permet l'orientation du dispositif autour de l'axe XX' en fonction de son environnement, par exemple en fonction de la position de l'évier 3. Elle permet également les opérations de maintenance.

Dans le cas où l'embout 20 est réalisé par usinage, un espace minimum est nécessaire entre les manchons 21 et 22 pour le passage de l'outil, ce qui détermine la valeur minimale du diamètre du manchon 22. Comme le diamètre du tube 11 est conservé à une valeur faible pour une question d'encombrement, le réducteur de diamètre 18 a pour fonction de permettre l'adaptation des diamètres respectifs des éléments 11 et 22. Dans le cas d'un embout 20 fabriqué différement, par exemple moulé ou embouti, le réducteur de diamètre 18 pourrait être supprimé.

Le mode de liaison des éléments 4, 5, 10, 11, 16 à 18 et 20 entre eux dépend de la nature de leurs matériaux constitutifs. En pratique, les pièces 10, 11, 16 à 18 et 20 peuvent être en acier inoxydable, auquel cas elles sont avantageusement soudées entre elles, à l'exception des ferrules 16 et 17, et sur les lignes d'alimentation qui peuvent également être en acier inoxydable ou en un autre métal. Selon la nature du liquide circulant dans les conduits, les pièces 10, 11, 16 à 18 et 20 peuvent être réalisées en un autre matériau et, par exemple, en matière plastique, auquel cas elles peuvent être soudées ou collées ensemble.

On note que le montage de l'embout 20 par rapport aux tubes 10 et 11 peut être effectué avec différentes orientations angulaires de la sortie 24 autour de l'axe XX', l'embout ayant été représenté sur les figures dans une position permettant de visualiser la sortie 24. En pratique, l'orientation de l'embout 20 autour de l'axe XX' dépend des positions respectives des lignes 4 et 5 et de la vanne 13.

La configuration représentée à la figure 1 présente l'avantage supplémentaire de permettre une vidange efficace de l'installation dans la mesure où, en l'absence d'alimentation en eau à travers la ligne 4, l'ouverture de la vanne 13 permet de vidanger les conduits A et B et la ligne 5, au moins partiellement pour cette dernière.

Une collerette radiale 30 soudée sur la surface externe du tube 11 est apte à recevoir des vis de blocage 31 prévues pour pénétrer dans des écrous borgnes 32 portés par une plaque ou rosace 33 destinée à être disposée en arrière de la cloison 2 par rapport à la partie visible du dispositif 1. Cet arrangement permet de fixer de façon rapide et efficace le dispositif 1, préparé en atelier, par rapport à la cloison 2. Les opérations à réaliser sur chantier sont ainsi limitées au raccordement de l'embout 20 sur les lignes 4 et 5, à l'accouplement des ferrules 16 et 17 et au serrage des vis 31, ce qui peut être effectué rapidement.

L'espace peut être divisé entre une zone visible, représentée sur la gauche de la cloison 2 à la figure 1, et une zone technique, représentée sur la droite de cette cloison sur cette même figure. Le dispositif de puisage a l'aspect d'un robinet mono-tube dans la zone visible, alors que son encombrement latéral dans cette zone est limité au diamètre extérieur du tube 11 qui peut être réduit en fonction du débit d'eau souhaité.

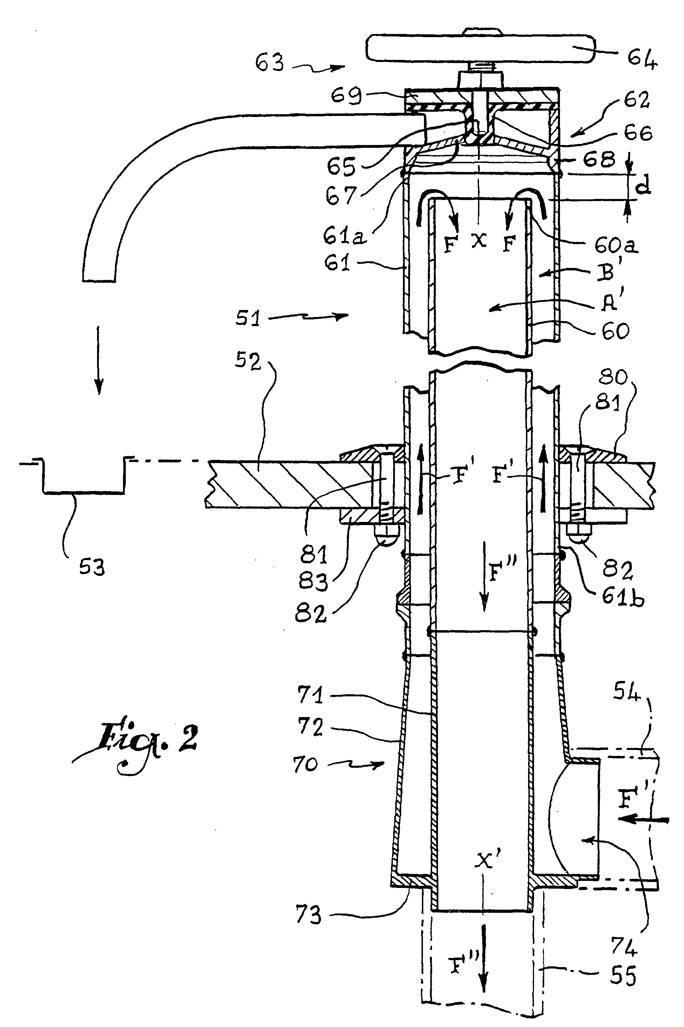

Dans le second mode de réalisation de l'invention représenté à la figure 2, les éléments analogues à ceux du mode de réalisation de la figure 1 portent des références identiques augmentées de 50. Ce second dispositif de puisage 51 est destiné à être monté verticalement au-dessus d'une paillasse 52 d'un laboratoire de mesures au niveau d'un évier 53. Il est prévu pour être relié à une ligne 54 d'amenée d'eau et à une ligne 55 de re-circulation. Un tube intérieur 60 et un tube extérieur 61 définissent deux conduits A' et B' de circulation de l'eau vers et à partir d'une vanne 63 intégrée dans un bouchon 62 d'obturation de l'extrémité supérieure 61a du tube 61.

Plus précisément, la vanne 63 comprend un volant 64 de manoeuvre d'un poussoir 65 prévu pour déformer plus ou moins une membrane 66 en regard d'un siège 67 formé par le corps 68 de la vanne 63. Un couvercle 69 maintient la membrane 66 en position sur le corps 68. La forme tronconique du corps 68 au niveau du siège 67 permet, d'une part la purge de l'air présent dans les conduits A' et B' car il a tendance à s'accumuler au voisinage de la vanne 63 et, d'autre part, la vidange totale de la partie extérieure de la vanne 63, car l'eau ne peut pas stagner dans le corps 68. Ainsi, la vanne 63 est intégrée au bouchon 62, ce qui permet de limiter considérablement le bout mort du dispositif de puisage de l'invention, puisque le volume intérieur 62a du bouchon 62 est délimité par le corps 68.

Comme précédemment, l'extrémité supérieure 60a du tube 60 est en retrait d'une distance d par rapport à l'extrémité 61a du tube 61, ce qui permet une circulation de l'eau entre les conduits A' et B', comme représenté par la flèche F.

Un embout de raccordement 70, installé au pied du dispositif 51, est raccordé par une ouverture radiale 74 ménagée dans un manchon externe 72 à la ligne 54, alors qu'un manchon interne 71 est raccordé à la ligne 55. De ce fait, le conduit A' d'amenée de l'eau au niveau de la vanne 63 est défini entre les tubes 60 et 61, alors que le conduit B' de re-circulation de l'eau est défini à l'intérieur du tube 60.

On note 73 le voile de fond de l'embout 70 reliant les manchons 71 et 72 et F' et F", les flèches représentant respectivement la circulation de l'eau de la ligne 54 vers le conduit A' et du conduit B' vers la ligne 55. L'embout 70 est soudé sur le tube 60, alors qu'il est raccordé de façon démontable sur le tube 61 afin de permettre le montage et le démontage du dispositif de part et d'autre de la paillasse 52.

Comme précédemment, une collerette 80 est soudée autour du tube extérieur 61 pour permettre l'immobilisation du dispositif 51 par rapport à la paillasse 52 grâce à des vis 81 coopérant avec des écrous 82 portés par une plaque ou rosace 83. Un réducteur de diamètre non représenté pourrait également être disposé entre l'extrémité inférieure 61b du tube 61 et le manchon extérieur 72 de l'embout 70.

L'invention a été représentée avec un dispositif de puisage pour une boucle de distribution en eau. Elle est bien entendu applicable quel que soit le liquide puisé. Bien qu'une vanne à membrane soit particulièrement adaptée au dispositif de l'invention, tout type de vanne à commande manuelle ou automatique peut être utilisé. De la même manière, différents modes de fixation du dispositif sur une plaque support peuvent être envisagés sans sortir du cadre de la présente invention. Le dispositif de l'invention peut être utilisé pour prélever un liquide au-dessus d'un évier, mais également pour de déverser directement dans un récipient ou alimenter une machine telle qu'une cuve de formulation, une machine à laver ou une remplisseuse. Le dispositif de l'invention peut être monté horizontalement, comme représenté à la figure 1, ou verticalement, en s'étendant vers le haut, par exemple à partir d'une paillasse comme représenté à la figure 2, ou vers le bas, par exemple à partir d'un plafond. Comme il ressort de la comparaison des modes de réalisation des figures 1 et 2, les conduits d'amenée et de re-circulation du liquide peuvent être au choix, respectivement, le conduit extérieur ou le conduit intérieur du dispositif. Les tubes formant les conduits et les manchons ont été décrits à section circulaire ; cependant d'autres sections, par exemple ovales ou polygonales, peuvent être utilisées.

## Revendications

1. Dispositif de puisage (1 ; 51) pour une installation de distribution de produit liquide comprenant une vanne commandée, **caractérisé en ce qu'**il comprend deux conduits concentriques (A, B ; A', B") dédiés, pour l'un, à l'amenée de liquide jusqu'au niveau de ladite vanne (13 ; 63) et, pour l'autre, à la re-circulation du liquide à partir de ladite vanne.

2. Dispositif de puisage selon la revendication 1, **caractérisé en ce que** lesdits deux conduits (A, B ; A', B')sont formés de deux tubes concentriques (10, 11 ; 60, 61), respectivement externe et interne, le tube externe (11, 61) étant obturé à une extrémité (11a ; 61a) alors que le tube interne (10 ; 60) est ouvert à son extrémité correspondante (10a ; 60a)

3. Dispositif de puisage selon la revendication 2, **caractérisé en ce que** ladite vanne (13 ; 63) est installée au niveau de ladite extrémité obturée (11a ; 61a) dudit tube externe (11 ; 61).

4. Dispositif de puisage selon la revendication 3, **caractérisé en ce que** ladite vanne (13) est montée à l'extérieur de ladite extrémité obturée (11a) dudit tube externe (11).

5. Dispositif de puisage selon la revendication 3, **caractérisé en ce que** ladite vanne (63) est intégrée au moyen d'obturation (62) dudit tube externe (61) au niveau de son extrémité (61a).

6. Dispositif de puisage selon l'une des revendications précédentes, **caractérisé en ce que** ladite vanne (13 ; 63) est du type à membrane, à commande manuelle ou automatique.

7. Dispositif de puisage selon l'une des revendications précédentes, **caractérisé en ce que** les sections de passage desdits conduits concentriques ( A, B ; A', B') sont sensiblement équivalentes.

8. Dispositif de puisage selon l'une des revendications précédentes, **caractérisé en ce qu'**il comprend une collerette (30 ; 80) radiale fixée sur une surface externe d'un tube externe (11 ; 61) formant conduit (B ; A') de circulation du liquide, ladite collerette étant apte à recevoir des moyens (31 ; 81) de coopération avec une patte (33 ; 83) d'immobilisation dudit tube à travers une plaque support (2 ; 52).

9. Dispositif de puisage selon l'une des revendications précédentes, **caractérisé en ce qu'**il comprend un embout (20 ; 70) de raccordement desdits conduits (A, B ; A', B') à des lignes (4, 5 ; 54, 55) d'alimentation en liquide, ledit embout étant formé de deux manchons concentriques (21, 22 ; 71, 72) reliés par un voile de fond (23 ; 73), le manchon interne (21, 71) étant ouvert à ses deux extrémités alors que le manchon externe (22 ; 72) est pourvu d'une ouverture radiale (24 ; 74).

10. Dispositif de puisage selon l'une des revendications précédentes, **caractérisé en ce que** lesdits conduits concentriques (A, B ; A', B') sont formés d'éléments (10, 11, 16, 20 ; 60, 61, 70) en acier inoxydable.

## Patentansprüche

1. Schöpfvorrichtung für eine Anlage zur Verteilung von Flüssigkeit mit einem gesteuerten Ventil, **dadurch gekennzeichnet, dass** sie zwei konzentrische Leitungen (A, B; A', B') umfasst, davon die eine zur Zufuhr von Flüssigkeit bis zu dem Ventil (13; 63) und die andere zur Rezirkulation der Flüssigkeit von dem Ventil.

2. Schöpfvorrichtung nach Anspruch 1, **dadurch gekennzeichnet, dass** die zwei Leitungen (A, B; A', B') aus zwei konzentrischen Rohren (10, 11; 60, 61), jeweils einem äußeren und einem inneren, gebildet sind, wobei das äußere Rohr (11, 61) an einem Ende (11a; 61a) verschlossen ist, während das innere Rohr (10; 60) an seinem entsprechenden Ende (10a; 60a) offen ist.

3. Schöpfvorrichtung nach Anspruch 2, **dadurch gekennzeichnet, dass** das Ventil (13; 63) an dem verschlossenen Ende (11a; 61a) des äußeren Rohrs (11; 61) installiert ist.

4. schöpfvorrichtung nach Anspruch 3, **dadurch gekennzeichnet, dass** das Ventil (13) außerhalb des verschlossenen Endes (11a) des äußeren Rohrs (11) befestigt ist.

5. Schöpfvorrichtung nach Anspruch 3, **dadurch gekennzeichnet, dass** das Ventil (63) in das Verschlussmittel (62) des äußeren Rohrs (61) an seinem Ende (61a) integriert ist.

6. Schöpfvorrichtung nach einem der vorhergehenden Ansprüche, **dadurch gekennzeichnet, dass** das Ventil (13; 63) ein Membranventil mit manueller oder automatischer Steuerung ist.

7. Schöpfvorrichtung nach einem der vorhergehenden Ansprüche, **dadurch gekennzeichnet, dass** die Durchgangsquerschnitte der konzentrischen Leitungen (A, B; A', B') im wesentlichen äquivalent sind.

8. Schöpfvorrichtung nach einem der vorhergehenden Ansprüche, **dadurch gekennzeichnet, dass** sie einen radialen Flansch (30; 80) umfasst, der auf der Außenfläche eines Außenrohrs (11; 61) befestigt ist, das eine Zirkulationsleitung (B; A') der Flüssigkeit bildet, wobei der Kragen geeignet ist, Mittel zum Zusammenwirken (31; 81) mit einem Anker (33; 83) zur Befestigung des Rohres durch eine Stützplatte (2; 52) aufzunehmen.

9. schöpfvorrichtung nach einem der vorhergehenden Ansprüche, **dadurch gekennzeichnet, dass** sie ein Ansatzstück (20; 70) zum Anschluss der Leitungen (A, B; A', B') an Versorgungsleitungen (4, 5; 54, 55) für Flüssigkeiten umfasst, wobei das Ansatzstück von zwei konzentrischen Hülsen (21, 22; 71, 72) gebildet wird, die durch eine Rückwand (23; 73) miteinander verbunden sind, wobei die innere Hülse (21, 71) an ihren zwei Enden offen ist, während die äußere Hülse (22; 72) mit einer Radialöffnung (24; 74) versehen ist.

10. Schöpfvorrichtung nach einem der vorhergehenden Ansprüche, **dadurch gekennzeichnet, dass** die konzentrischen Leitungen (A, B; A', B') aus Elementen (10, 11, 16, 20; 60, 61, 70) aus nicht oxidierbarem Stahl gebildet sind.

## Claims

1. Tapping device (1; 51) for a liquid product supply installation containing a control valve, **characterised in that** it comprises two dedicated concentric pipes (A, B; A', B"), one for feeding liquid as far as the said valve (13; 63) and the other for recirculation of the liquid from the said valve.

2. Tapping device according to Claim 1, **characterised in that** the said two pipes (A, B; A', B') are made of two concentric tubes (10, 11; 60, 61), external and internal respectively, the external tube (11, 61) being blanked off at one end (11a; 61a), whilst the internal tube (10; 60) is open at its corresponding end (10a, 60a).

3. Tapping device according to Claim 2, **characterised in that** the said valve (13; 63) is installed at the said blanked-off end (11a; 61a) of the said external tube (11; 61).

4. Tapping device according to Claim 3, **characterised in that** the said valve (13) is fitted on the outside of the said blanked-off end (11a) of the said external tube (11).

5. Tapping device according to Claim 3, **characterised in that** the said valve (63) is integrated into the blanking means (62) of the said external tube (61) at its end (61a).

6. Tapping device according to one of the preceding claims, **characterised in that** the said valve (13; 63) is of the membrane type with manual or automatic control.

7. Tapping device according to one of the preceding claims, **characterised in that** the flow cross-sections of the said concentric pipes (A, B; A', B') are essentially equivalent.

8. Tapping device according to one of the preceding claims, **characterised in that** it comprises a radial flange (30; 80) fixed on an external surface of an external tube (11; 61) forming pipe (B; A') for circulation of the liquid, the said flange being suitable for receiving means (31; 81) for interacting with a fastening (33; 83) for immobilisation of the said tube through a support plate (2; 52).

9. Tapping device according to one of the preceding claims, **characterised in that** it comprises a fitting (20; 70) for connecting the said pipes (A, B; A', B') to liquid feed Lines (4, 5; 54, 55), the said fitting being formed by two concentric sleeves (21, 22; 71, 72) joined by a base wall (23; 73), the internal sleeve (21, 71) being open at its two ends, whilst the external sleeve (22; 72) is provided with a radial opening (24; 74).

10. Tapping device according to one of the preceding claims, **characterised in that** the said concentric pipes (A, B; A', B') are made up of elements (10, 11, 16, 20; 60, 61, 70) made of stainless steel.
